# EUROPÄISCHE PATENTSCHRIFT

(11) **EP 4 434 804 B1**
(45) Veröffentlichungstag und Bekanntmachung des Hinweises auf die Patenterteilung: **31.12.2025**
(21) Anmeldenummer: 23163700.0
(22) Anmeldetag: 23.03.2023
(51) Int. Cl.: B60L 53/12, B60L 53/302, H01F 27/02, H01F 27/08, H01F 27/22, H01F 27/30, H01F 27/36, H01F 27/26, H01F 38/14, H02J 50/00, H02J 50/12

(54) **BODENBAUGRUPPE FÜR EINE INDUKTIVE LADEVORRICHTUNG**
GROUND ASSEMBLY FOR AN INDUCTIVE CHARGING DEVICE
ENSEMBLE DE PLANCHER POUR UN DISPOSITIF DE CHARGE INDUCTIF

(43) Veröffentlichungstag der Anmeldung: 25.09.2024
(73) Patentinhaber: MAHLE International GmbH, 70376 Stuttgart (DE)
(72) Erfinder: BÖTTIGHEIMER, Mike, 70806 Kornwestheim (DE); HIMMER, Thomas, 73326 Reichenbach (Deggingen) (DE); LÄMMLE, Christopher, 70567 Stuttgart (DE); STEINBACH, Martin, 71336 Waiblingen (DE); SCHROTH, Dr. Holger, 75433 Maulbronn (DE)
(74) Vertreter: BRP Renaud & Partner mbB Rechtsanwälte Patentanwälte Steuerberater

(56) Entgegenhaltungen:
- DE-A1- 102017 206 898
- DE-A1- 102021 205 979
- DE-A1- 102021 205 980
- KR-A- 20210 050 923
- US-A- 6 049 191
- US-A1- 2017 076 854

## Beschreibung

Die vorliegende Erfindung betrifft eine Bodenbaugruppe für eine induktive Ladevorrichtung zum induktiven Laden eines Kraftfahrzeugs.

Bei zumindest teilelektrisch angetriebenen Kraftfahrzeugen ist ein regelmäßiges Aufladen eines elektrischen Energiespeichers des Kraftfahrzeugs notwendig. Hierzu kann prinzipiell eine unmittelbare elektrische Verbindung zwischen dem Kraftfahrzeug und einer externen elektrischen Energiequelle, beispielsweise einem Stromanschluss, hergestellt werden. Dies erfordert jedoch eine manuelle Tätigkeit eines Benutzers.

Ferner ist es bekannt, das Kraftfahrzeug, das heißt insbesondere dessen elektrischen Energiespeicher induktiv aufzuladen. In einer Bodenbaugruppe ("Ground Assembly") außerhalb des Kraftfahrzeugs befindet sich dazu eine Primärspule, die mit einer Sekundärspule ("Vehicle Assembly") im Kraftfahrzeug induktiv zusammenwirkt. Im Betrieb der Ladevorrichtung befindet sich das zu ladende Kraftfahrzeug auf einem Untergrund über der Bodenbaugruppe, weshalb die Bodenbaugruppe derart auszulegen ist, dass sie die Last des zu ladenden Kraftfahrzeugs tragen kann. Weiter kann im Betrieb der Ladevorrichtung in der Bodenbaugruppe durch die zu erbringende Ladeleistung Wärme entstehen, die bis zu 10% der elektrischen Ladeleistung betragen und zu einem unerwünschten Temperaturanstieg der Bodenbaugruppe und damit verbunden auch zu einem Versagen der elektrischen und/oder elektromagnetischen Komponenten führen kann.

Um die mechanischen und thermischen Belastungen aufnehmen zu können, ist es bei bekannten Bodenbaugruppen bekannt, belastungskritische Komponenten sehr massiv auszubilden und dadurch zu überdimensionieren oder thermisch zu überwachen, um bei einer Überhitzung die Ladeleistung zu reduzieren. Der Fachmann spricht hier vom sogenannten Derating. Alternativ ist auch eine aktive Kühlung denkbar, wobei effektive Wärmeableiter oft aus Metall sind und dadurch ein Magnetfeld stören können und deren Anordnung schwierig machen. Zudem ist eine derartige aktive Kühlung aufwendig und teuer. DE 10 2021 205980 A1, US 2017/076854 A1 und DE 10 2021 205979 A1 offenbaren jeweils Bodenbaugruppe für eine induktive Ladevorrichtung zum induktiven Laden eines auf einem Untergrund abgestellten Kraftfahrzeugs gemäß dem Stand der Technik.

Die vorliegende Erfindung beschäftigt sich deshalb mit dem Problem, für eine Bodenbaugruppe für eine induktive Ladevorrichtung der eingangs genannten Art eine verbesserte oder zumindest andere Ausführungsform anzugeben, die insbesondere die aus dem Stand der Technik bekannten Nachteile überwindet. Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Leistungsübertragung beim Laden eines Elektrofahrzeugs mittels einer erfindungsgemäßen Bodenbaugruppe mit einer Grundplatte sowie einem darüber über zumindest eine Stütze abgestützten Kernkörper und einer Flachspule dadurch zu erhöhen, dass ein konduktives Wärmeleitelement vorgesehen ist, über welches eine Wärmeableitung und damit eine Kühlung von beispielsweise einer Flachspule über die zumindest eine Stütze an die insbesondere als Kühlplatte ausgebildete Grundplatte möglich ist und dadurch eine Entwärmung bzw. eine Kühlung der Flachspule und dem Kernkörper verbessert werden kann, wodurch eine höhere Ladeleistung bei gleichem Leiterquerschnitt oder eine gleiche Ladeleistung bei geringerem Leiterquerschnitt ermöglicht wird. Zur Entwärmung des zumindest einen Kernkörpers ist dabei zumindest ein als Wärmeleitmantel ausgebildetes Wärmeleitelement vorgesehen, wobei der Wärmeleitmantel den Kernkörper und die Grundplatte wärmeübertragend verbindet und zumindest eine Stütze mantelartig umgibt. Hierdurch ist der als Metallfolie ausgebildete Wärmeleitmantel zusammen mit der Stütze, die beispielsweise aus Kunststoff ausgebildet sein kann, in einem Zentralbereich des abzustützenden Kernkörpers angeordnet werden, wodurch einerseits eine optimierte Lastabtragung des Kernkörpers, beispielsweise eines Ferritkörpers, in die zugehörige Stütze und zugleich eine optimierte Entwärmung des Kernkörpers erreicht werden kann, ohne dass der Wärmeleitmantel ein Magnetfeld im Kernkörper stören würde, da dieses im Zentralbereich vergleichsweise gering ist. Die erfindungsgemäße Bodenbaugruppe für eine induktive Ladevorrichtung zum induktiven Laden eines auf einem Untergrund abgestellten Kraftfahrzeugs besitzt dabei die zuvor erwähnte und insbesondere als Kühlplatte ausgebildete Grundplatte, beispielsweise eine Aluminiumplatte, die sich quer zu einer Abstandsrichtung plattenförmig erstreckt. Ebenfalls besitzt die erfindungsgemäße Bodenbaugruppe zumindest eine Flachspule, die einen spiralförmig gewundenen Leiter aufweist und in Abstandsrichtung zur Grundplatte beabstandet, das heißt oberhalb derselben angeordnet ist. Des Weiteren weist die erfindungsgemäße Bodenbaugruppe zumindest einen Kernkörper, der sich quer zur Abstandsrichtung plattenförmig erstreckt und beispielsweise als Ferritkörper ausgebildet ist, auf. Zwischen dem zumindest einen Kernkörper und der Grundplatte ist dabei ein unterer Hohlraum ausgebildet, in welchem beispielsweise ein Kühlluft strömen und/oder Elektronikkomponenten angeordnet werden können. Zwischen dem zumindest einen Kernkörper und der Grundplatte ist dabei zumindest eine Stütze vorgesehen, die sich in Abstandsrichtung durch den unteren Hohlraum erstreckt, wobei zumindest ein Wärmeleitmantel vorgesehen ist, der den Kernkörper und die Grundplatte wärmeübertragend verbindet und zumindest eine Stütze mantelartig umgibt. Durch die gewählte Anordnung des Wärmeleitmantels um die Stütze herum kann der zwischen den einzelnen Stützen und zwischen dem Kernkörper und der Grundplatte vorhandene untere Hohlraum frei von Wärmeleitelementen gehalten werden, wodurch sich hier ein vergleichsweise großer und frei bestückbarer Bauraum ergibt. Durch den erfindungsgemäß vorgesehenen Wärmeleitmantel ist auch eine Bodenbaugruppe mit hoher Ladeleistung möglich, da die Kernkörper, beispielsweise Ferritplatten, mit hoher Kühlleistung entwärmt werden können. Zudem ist die erfindungsgemäße Bodenbaugruppe wenig komplex, das heißt konstruktiv einfach aufgebaut und kann dadurch kostengünstig und einfach gefertigt werden. Ist die zumindest eine Stütze zudem noch in einem Zentralbereich des jeweiligen Kernkörpers angeordnet, so beeinflusst weder sie, sofern sie beispielsweise aus Metall ausgebildet ist, noch der diese Stütze umgebende Wärmeleitmantel das magnetische Feld im Kernkörper, wodurch keine negativen Interaktionen zu befürchten sind. Durch eine Anordnung der Stütze im Zentralbereich des jeweiligen zugehörigen Kernkörpers kann vorzugsweise auch eine reine Druckbelastung in den Kernkörpern erzeugt werden, was belastungstechnisch günstig ist, da derartige Kernkörper, beispielsweise Ferrite, äußerst druckstabil, gleichzeitig aber biegesensibel sind. Die Stütze kann dabei quer zur Abstandsrichtung innerhalb eines solchen Zentralbereichs eines zugehörigen Kernkörpers angeordnet sein, wobei der Zentralbereich beispielsweise 80 % eines Durchmessers des jeweils zugehörigen Kernkörpers jeweils in Längsrichtung und Breitenrichtung, vorzugsweise 70 % des Durchmessers der einzelnen Kernkörper jeweils in Längsrichtung und in Breitenrichtung, besonders bevorzugt 50 oder gar 30 % des Durchmessers der einzelnen Kernkörper jeweils in Längsrichtung und Breitenrichtung beträgt.

Die erfindungsgemäße Bodenbaugruppe kann versenkt in einem Untergrund, insbesondere oberflächenfluchtend zu diesem angeordnet sein, wobei alternativ selbstverständlich auch eine Anordnung auf dem Untergrund denkbar ist.

Bei einer vorteilhaften Weiterbildung der erfindungsgemäßen Lösung ist der Wärmeleitmantel aus einem Material mit einer Wärmeleitfähigkeit von λ > 50 W/(m·K), insbesondere einer Wärmeleitfähigkeit von λ > 100 W/(m·K), auf. Als Material für die jeweiligen Wärmeleitmäntel kann somit beispielsweise Aluminium mit einer Wärmeleitfähigkeit λ von 235 W/(m·K) in Frage kommen.

Zweckmäßig ist die zumindest eine Stütze aus Kunststoff ausgebildet. Eine derartige Ausbildung aus Kunststoff ermöglicht eine leichte Bauweise der erfindungsgemäßen Bodenbaugruppe, was insbesondere Wartungsarbeiten stark vereinfacht. Trotzdem können derartige Kunststoffstützen hohe Tragfähigkeiten aufweisen und dadurch die beim Überfahren auftretenden mechanischen Belastungen problemlos abtragen.

Alternativ ist die zumindest eine Stütze zumindest teilweise aus Metall, insbesondere aus Aluminium, ausgebildet. Wiederum alternativ ist auch denkbar, dass die zumindest eine Stütze teilweise aus Grafit oder aus Keramik, insbesondere aus Aluminiumnitrid oder Aluminiumsilizid ausgebildet ist. Grafit besitzt dabei eine Wärmeleitfähigkeit λ von 15 bis 20 W/(m·K), während eine Aluminiumnitridkeramik sogar eine Leitfähigkeit λ von 180 W/(m·K) besitzen kann. Der Einsatz insbesondere derartiger Aluminiumnitridkeramiken ist insbesondere dort von großem Interesse, wo viel Wärme abgeführt werden muss, ein Werkstoff jedoch unter Umständen nicht elektrisch leitend sein darf. Mit einer möglichen Positionierung im Zentralbereich ist es möglich, metallische Stützen sowohl zur Lastableitung als auch zur Wärmeableitung und damit zur Entwärmung bzw. Kühlung der Flachspule bzw. der Kernanordnung ohne bzw. mit nur marginalem Einfluss auf das Magnetfeld einzusetzen.

Bei einer weiteren vorteilhaften Ausführungsform der erfindungsgemäßen Bodenbaugruppe weist der Wärmeleitmantel Kupfer, Aluminium und/oder Grafit auf. Bereits diese nicht abschließende Aufzählung lässt erahnen, welch mannigfaltige Möglichkeiten für das Material des Wärmeleitmantels zur Verfügung stehen, da dieser keinerlei Tragfunktion, sondern lediglich eine Wärmeleitfunktion und damit eine Entwärmung der Kernkörper bzw. eine Kühlung derselben bewirken muss.

Besonders Metalle wie Aluminium und Kupfer weisen dabei eine hohe Wärmeleitfähigkeit und damit eine hohe Möglichkeit der Kühlung der Kernkörper durch eine Wärmeabfuhr über die Wärmeleitmäntel in die Grundplatte auf. Zusätzlich oder alternativ kann der Wärmeleitmantel auch als Folie ausgebildet sein, wodurch eine besonders dünne und auch gewichtsoptimierte Ausbildung möglich ist. Da insbesondere Aluminium eine hohe Wärmeleitfähigkeit von ca. 235 W/(m K) aufweist, kann der Wärmeleitmantel aus vergleichsweise dünnem Material ausgebildet sein und trotzdem seine wärmeableitende Funktion problemlos übernehmen.

Zweckmäßig ist der Wärmeleitmantel wärmeübertragend, insbesondere flächig, mit zumindest einem der nachfolgenden Bauteile verbunden: Grundplatte, Stütze, Kernkörper. Hierdurch ist eine optimierte Wärmeableitung aus dem Kernkörper, beispielsweise der Ferritplatte, entweder direkt über den Wärmeleitmantel in die Grundplatte oder bei einer flächigen Anbindung an die Stütze auch über die Stütze in die Grundplatte möglich.

Bei einer weiteren vorteilhaften Ausführungsform der erfindungsgemäßen Baugruppe ist der Wärmeleitmantel über ein thermisches Interfacematerial (TIM), insbesondere über einen Klebstoff, eine Wärmeleitpaste oder eine Klebefolie mit einer Wärmeleitfähigkeit von λ > 0,8 W/(m·K) mit zumindest der Grundplatte und/oder dem Kernkörper bzw. der Stütze verbunden. Wird als Wärmeleitmantel beispielsweise eine Aluminiumfolie verwendet, so ist bei einer Anbindung an die vorzugsweise ebenfalls aus Aluminium ausgebildete Grundplatte lediglich ein hoher Wärmeübertrag zu beachten, während bei einer Anbindung des als Aluminiumfolie ausgebildeten Wärmeleitmantels an den als Ferritkörper ausgebildeten Kernkörper auch eine Korrosionsproblematik zu beachten ist, so dass in diesem Fall eine Anbindung über ein derartiges thermisches Interfacematerial von großem Vorteil ist, da zwischen dem Wärmeleitmantel und dem Kernkörper kein direkter Kontakt besteht, so dass keine Kontaktkorrosion auftreten kann.

Zweckmäßig sind an der Grundplatte ein in Abstandsrichtung abstehender Pin und an der zugehörigen Stütze eine komplementär dazu ausgebildete Öffnung vorgesehen. Der Pin kann dabei vorzugsweise formschlüssig in die Öffnung der Stütze eingreifen, so dass bei einer geeigneten Querschnittsform des Pins eine vordefinierte Drehwinkellage der Stütze erzwungen werden kann. Ist der Pin beispielsweise rund und die zugehörige komplementäre Öffnung ebenfalls, so kann die Stütze über ihre Achse relativ zum Pin verdreht werden, was nicht möglich ist, sofern der Pin beispielsweise einen eckigen Außenquerschnitt aufweist und die Öffnung einen komplementär dazu ausgebildeten, eckigen Innenquerschnitt. Durch eine derartige eckige Ausgestaltung des Pins und der Öffnung ist jedoch nicht nur eine Ausrichtung der Stütze relativ zur Grundplatte, sondern zugleich auch des Wärmeleitmantels möglich, was insbesondere dann vorteilhaft ist, wenn der obere Abschluss des Wärmeleitmantels die geometrisch flächige Ausdehnung des Kernkörpers in seiner Einbaulage abbildet bzw. näherungsweise abbildet. Der Pin und die zugehörige Öffnung sichern die Stütze quer zur Abstandsrichtung.

Bei einer weiteren vorteilhaften Ausführungsform der erfindungsgemäßen Bodenbaugruppe weist die Flachspule einen Litzenträger auf, der zumindest ein koaxial zu einer zugehörigen Stütze angeordnetes Druckpodest besitzt, über welches der Litzenträger auf einem zugehörigen Kernkörper aufliegt. Das Druckpodest ist dabei bezüglich einer sich in Abstandsrichtung erstreckenden Achse koaxial zur Stütze angeordnet, wodurch es möglich ist, Lasten, wie beispielsweise von auf der Bodenbaugruppe fahrenden Kraftfahrzeugen, ausschließlich als Drucklasten und nicht als Biegelasten in die Kernkörper und von diesen in die jeweiligen Stützen einzuleiten. Da insbesondere Ferrit äußerst druckstabil ist, kann ein aus einem solchen Material bestehender Kernkörper eine reine Druckbelastung sehr gut aufnehmen. Um das Druckpodest herum ist der Litzenträger, insbesondere ein unterer Litzenträger von dem jeweiligen Kernkörper abgesetzt, das heißt in Abstandsrichtung beabstandet, sodass eine Lasteinleitung in den Kernkörper ausschließlich über das Druckpodest erfolgt. Hierdurch können sowohl die mechanische Belastbarkeit als auch die Ladeleistung der Bodenbaugruppe deutlich gesteigert werden.

Bei einer vorteilhaften Weiterbildung weist die Grundplatte zumindest einen Kühlkanal für ein Kühlmittel auf. Hierdurch ist eine aktive Kühlung der Grundplatte im Betrieb möglich, wobei die wärmeleitenden Stützen gleichzeitig auch eine Kühlung der im Einbauzustand darüber angeordneten Kernanordnung bzw. der Kernkörper und der Flachspule bewirken. Zudem kühlt die aktiv gekühlte Grundplatte wiederum die Luft innerhalb des unteren Hohlraumes, wodurch eine Kühlung einer dort angeordneten Elektronik sowie auch eine Luftkühlung der oberhalb des unteren Hohlraums angeordneten Kernanordnung bzw. Kernkörper möglich ist. Bereiche, auf denen die jeweiligen Stützen auf der Grundplatte aufliegen, besitzen dabei vorzugsweise keine Kühlkanäle, um eine ausreichende Druckstabilität gewährleisten zu können.

Die Grundplatte selbst ist vorteilhafterweise aus einem Metall oder einer Metalllegierung, beispielsweise Aluminium, ausgebildet, um eine Wärmeübertragung zwischen Kühlmittel, Grundplatte, Luft und Stützen zu verbessern. Durch die beabstandete Anordnung der Grundplatte zur Flachspule und der Kernanordnung wird darüber hinaus eine elektromagnetische Wechselwirkung der Grundplatte mit der Flachspule und der Kernanordnung minimiert bzw. zumindest reduziert. Ein Abstand der Grundplatte zur Kernanordnung in Abstandsrichtung kann hierbei zwischen mehreren Millimetern und mehreren Zentimetern betragen. Durch die Herstellung der Grundplatte aus Metall bzw. einer Metalllegierung erfolgt zugleich eine elektromagnetische Abschirmung der Bodenbaugruppe nach unten zum Untergrund hin.

Zweckmäßig ist zwischen zumindest einer Stütze und einem zugehörigen Kernkörper eine Verteilerplatte angeordnet. Eine derartige Verteilerplatte kann eine verbesserte Wärmeübertragung und damit eine verbesserte Kühlung der Kernanordnung gewährleisten, wobei selbstverständlich klar ist, dass auch die Verteilerplatte innerhalb des Zentralbereichs angeordnet ist, um insbesondere eine Beeinflussung des Magnetfeldes und damit das Erzeugen von Wirbelstromverlusten zumindest zu minimieren. Zudem ist die Verteilerplatte mit einer Dicke < 2 mm sehr flach und dicht unterhalb der Kernanordnung angeordnet. Auch in diesem Bereich direkt unterhalb und mit Abstand zu den Abstandsbereichen der Kernanordnung ist die Magnetflussdichte im Vergleich zum Bereich zwischen den einzelnen Kernkörpern, als auch in deren Randbereich deutlich herabgesetzt, so dass auch durch den Einsatz elektrisch leitfähiger Materialien für die Verteilerplatte sich sowohl keine großen zusätzlichen Verluste durch Wirbelströme oder Hysterese-Effekte ergeben als auch der Einfluss auf das Magnetfeld sehr gering und somit vernachlässigbar ist.

Bei einer besonders vorteilhaften Ausführungsform der erfindungsgemäßen Bodenbaugruppe ist die Verteilerplatte über eine adhäsive Schicht mit einer Wärmeleitfähigkeit von λ > 0,8 W/(m·K) und/oder einem Schubmodul von G < 10 MPa mit der Kernanordnung verbunden. Da die adhäsive Schicht, beispielsweise eine Klebstoffschicht, äußerst dünn ist, reicht hier auch eine reduzierte Wärmeleitfähigkeit λ von λ > 0,8 W/(m·K). Um darüber hinaus unterschiedliche thermische Ausdehnungskoeffizienten zwischen den Kernkörpern, beispielsweise einer Ferritplatte, und der Verteilerplatte ausgleichen zu können, ist es vorteilhaft, die Klebstoffschicht bzw. generell die adhäsive Schicht mit einem Schubmodul G < 10 MPa auszustatten.

Zweckmäßig durchdringt zumindest eine Stütze die Grundplatte. Eine solche Variante bietet den großen Vorteil, dass durch eine punktuelle Lagerung der gesamten Bodenbaugruppe auf einem gegebenenfalls unebenen Untergrund eine Unebenheit durch punktuelle Maßnahmen, wie beispielsweise ein punktuelles Mörtelbett, ausgeglichen werden kann, ohne dass hierdurch Zwängungsbeanspruchungen an der Struktur der Bodenbaugruppe entstehen. Gegebenenfalls kann dadurch auch eine Gehäusestruktur der Bodenbaugruppe einfacher und kostengünstiger gestaltet werden. Für eine besonders einfache Montage ist es zudem denkbar, dass die Stützen vor dem Aufsetzen der Bodenbaugruppe am Untergrund positionsgenau angebracht und nivelliert werden. Zur Verstärkung der mechanischen Tragsäulen, das heißt der Stützen, kann eine Anbindung auch durch weitere Verbindungsmittel, wie beispielsweise Schrauben unterstützt werden. Zur Aufnahme von lateralen Lasten, beispielsweise resultierend aus einem Anfahren eines Kraftfahrzeugs, kann die Bodenbaugruppe zusätzlich umlaufend an zumindest drei, vorzugsweise an vier bis acht Punkten umlaufend über den Umfang der Bodenbaugruppe mittels Bolzen im Untergrund fixiert werden.

Zweckmäßig ist zumindest ein Wärmeleitmantel becherförmig ausgebildet, mit einem zwischen Kernkörper und Stütze angeordneten Boden, einem insbesondere wärmeübertragend und flächig an der Stütze anliegenden Mantel und einem wärmeübertragend und flächig an der Grundplatte anliegenden Rand. Durch eine derartige becherförmige Ausbildung des Wärmeleitmantels kann eine zuverlässige Abdichtung der Bodenbaugruppe geschaffen werden, wodurch insbesondere auch die im vorherigen Absatz beschriebene die Grundplatte durchdringende Stütze realisierbar ist. Dabei ist der becherförmige Wärmeleitmantel mit seinem vorzugsweise kreisrunden Rand dicht mit der Grundplatte verbunden, beispielsweise verlötet, und damit ebenfalls optimiert wärmeübertragend verbunden. Zwischen der Stütze und dem Boden des Wärmeleitmantels bzw. zwischen dem Boden des Wärmeleitmantels und dem Kernkörper können dabei ebenfalls eine Wärmeleitpaste, ein Wärmeleitpad oder eine wärmeleitende Verteilerplatte angeordnet sein.

Zweckmäßig führt durch den unteren Hohlraum ein Luftströmungspfad. Hierdurch kann eine weitere verbesserte Kühlung der den unteren Hohlraum nach oben begrenzenden Kernkörper erreicht werden, da diese über in den Luftströmungspfad strömende Kühlluft gekühlt werden können. Durch die erfindungsgemäße Ausgestaltung des zumindest einen Wärmeleitmantels direkt als die jeweilige Stütze umgebenden Mantel, bleibt auch der untere Hohlraum frei von Wärmeleitelementen, so dass dieser effektiv zur Anordnung, beispielsweise elektronischer Bauteile, genutzt werden kann.

Bei einer weiteren vorteilhaften Ausführungsform der erfindungsgemäßen Bodenbaugruppe weist diese auf einer von der Grundplatte abgewandten Seite der Flachspule und in Abstandsrichtung zu dieser beabstandet eine Deckplatte auf, wobei zwischen der Flachspule und der Deckplatte eine Platine angeordnet ist. Hierdurch ist eine bauraumoptimierte Unterbringung derartiger elektronischer Bauteile, wie beispielsweise Platinen, denkbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einen Schnitt durch eine erfindungsgemäße Bodenbaugruppe einer induktiven Ladevorrichtung,
- Fig. 2: eine Darstellung wie in Fig. 1, jedoch in montiertem Zustand,
- Fig. 3: eine Darstellung wie in Fig. 1, jedoch bei einer anderen Ausführungsform eines Wärmeleitmantels,
- Fig. 4: eine Ansicht von unten auf eine mögliche Ausführungsform eines Wärmeleitmantels.

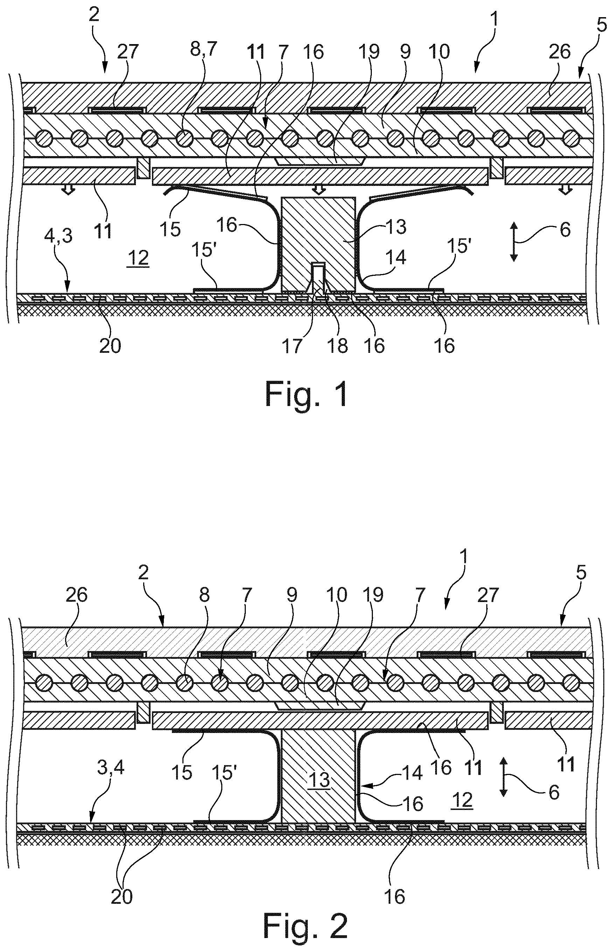

Entsprechend den Fig. 1 bis 3, weist eine erfindungsgemäße Bodenbaugruppe 1 für eine induktive Ladevorrichtung 2 zum induktiven Laden eines auf einem Untergrund 5 abgestellten und nicht näher bezeichneten Kraftfahrzeugs eine als Kühlplatte 3 ausgebildete Grundplatte 4 auf, die sich quer zu einer Abstandsrichtung 6 plattenförmig erstreckt. Ebenfalls vorgesehen ist zumindest eine Flachspule 7, die einen spiralförmig gebundenen Leiter 8 aufweist und in Abstandsrichtung 6 zur Grundplatte 4 beabstandet ist. Der Leiter 8 ist dabei zwischen einem oberen Litzenträger 9 und einem unteren Litzenträger 10 eingelegt. Ebenfalls vorgesehen ist zumindest ein Kernkörper 11, der beispielsweise als Ferritplatte ausgebildet ist, und sich quer zur Abstandsrichtung 6 plattenförmig erstreckt. Zwischen dem zumindest einen Kernkörper 11 und der Grundplatte 4 ist dabei ein unterer Hohlraum 12 ausgebildet. Getragen wird die Flachspule 7 bzw. der Kernkörper 11 von einer Stütze 13, die zwischen dem Kernkörper 11 und der Grundplatte 4 angeordnet ist und sich in Abstandsrichtung 6 durch den Hohlraum 12 erstreckt. Erfindungsgemäß ist nun zumindest ein Wärmeleitmantel 14 vorgesehen, der den Kernkörper 11, das heißt beispielsweise die Ferritplatte, und die Grundplatte 4 wärmeübertragend verbindet und zumindest eine Stütze 13 mantelartig umgibt. Über den Wärmeleitmantel 14 ist somit eine Entwärmung des Kernkörpers 11 und damit eine Kühlung desselben möglich, wodurch eine Ladeleistung der Ladevorrichtung 2 erhöht werden kann.

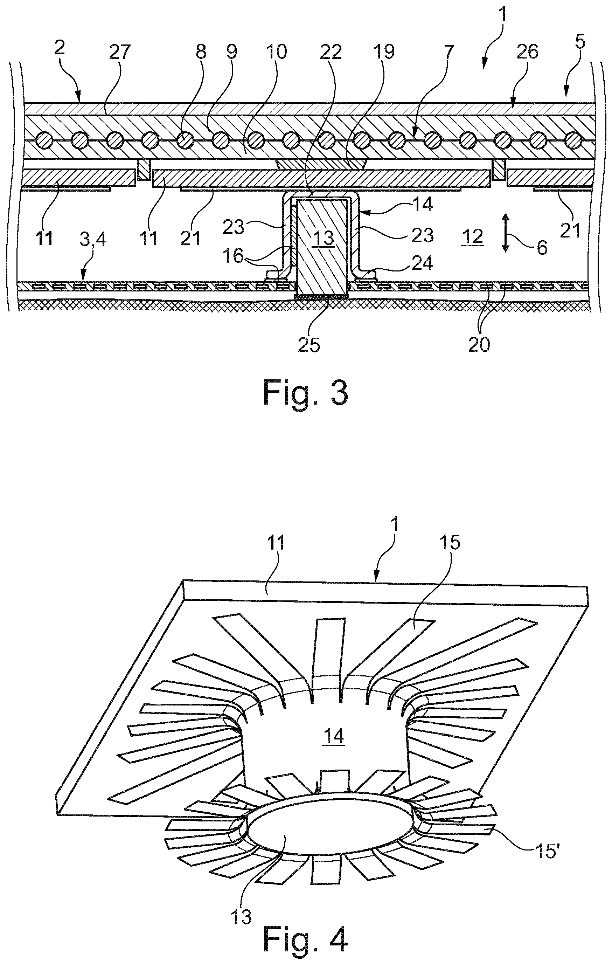

Der Wärmeleitmantel 14 kann dabei aus einem Material mit einer Wärmeleitfähigkeit von λ > 50 W/(m·K), vorzugsweise aus einem Material mit einer Wärmeleitfähigkeit von λ > 100 W/(m·K), ausgebildet sein. Durch die vergleichsweise zentrale Anordnung der Stütze 13 in Bezug auf den Kernkörper 11 kann der Wärmeleitmantel 14 rein theoretisch auch aus einem metallischen Material ausgebildet sein, da in dem Zentralbereich des Kernkörpers 11 eine Störung eines Magnetfelds nicht oder nur marginal auftritt. Betrachtet man den Wärmeleitmantel 14 gemäß der Fig. 4, so kann man erkennen, dass dieser über radial abstehende Arme 15 mit dem Kernkörper 11 und über ebenfalls radial abstehende Arme 15' wärmeübertragend mit der Grundplatte 4 verbunden ist. Als Material für den Wärmeleitmantel 14 kann beispielsweise Kupfer oder Aluminium in Frage kommen, wobei eine möglichst hohe Wärmeleitfähigkeit angestrebt wird.

Um eine möglichst enge und flächige Anlage des Wärmeleitmantels 14 an die Grundplatte 4, die Stütze 13 und den zu kühlenden Kernkörper 11 erreichen zu können, ist auch denkbar, dass der Wärmeleitmantel 14 als Folie ausgebildet ist.

Die zumindest eine Stütze 13 kann aus nahezu beliebigem Material ausgebildet werden, beispielsweise aus Kunststoff, wodurch eine gewichtsoptimierte und leichte Ausbildung möglich ist. Alternativ ist auch denkbar, dass die Stütze 13 zumindest teilweise aus Grafit oder aus Keramik, insbesondere aus Aluminiumnitrid oder Aluminiumsilizid ausgebildet ist, oder zumindest teilweise aus Metall, insbesondere aus Aluminium. Auch eine metallische Ausbildung der Stütze 13 ist denkbar, da diese im Zentralbereich des jeweils abzustützenden Kernkörpers 11 angeordnet ist, in welchem ein gegebenenfalls vorhandenes Magnetfeld klein oder gar nicht vorhanden ist.

Um die Anbindung des Wärmeleitmantels 14 zumindest an die Grundplatte 4 und an den zu kühlenden Kernkörper 11 weiter zu verbessern, kann auch ein sogenanntes thermisches Interfacematerial (TIM) 16 vorgesehen sein, wobei das thermische Interfacematerial 16 beispielsweise einen wärmeleitfähigen Klebstoff, eine Wärmeleitpaste oder eine Klebefolie mit einer Wärmeleitfähigkeit von λ > 0,8 W/(m·K) aufweist. Durch ein derartiges thermisches Interfacematerial 16, welches zudem noch eine adhäsive Verbindung zwischen dem Wärmeleitmantel 14 und dem Kernkörper 11 bzw. der Grundplatte 4 ermöglicht, kann zudem eine zuverlässige Fixierung des Wärmeleitmantels 14 am Kernkörper 11, an der Grundplatte 4 und gegebenenfalls auch an der Stütze 13 erreicht werden.

Betrachtet man die Fig. 1, so kann man erkennen, dass dort die erfindungsgemäße Bodenbaugruppe 1 während eines Montagezustands dargestellt ist, bei welchem die Arme 15' bereits flächig über beispielsweise das thermische Interfacematerial 16 mit der Grundplatte 4 und der Wärmeleitmantel 14 darüber hinaus über ein derartiges thermische Interfacematerial 16 mit der Stütze 13 verbunden ist. Auf den oberen Armen 15 ist bereits ein derartiges thermisches Interfacematerial 16 aufgetragen, wobei die äußeren Enden der Arme 15 umgebogen sind, wodurch eine vereinfachte Montage erreicht werden kann. Nach der Montage, der erfindungsgemäßen Bodenbaugruppe 1, wie dies gemäß der Fig. 2 dargestellt ist, liegt der Kernkörper 11 auf der Stütze 13 auf und wird durch diese abgestützt und gleichzeitig liegen die Arme 15 flächig und damit wärmeübertragend an der Unterseite des jeweils zu kühlenden Kernkörpers 11 an.

Bei einer weiteren vorteilhaften Ausführungsform der erfindungsgemäßen Bodenbaugruppe 1 kann an der Grundplatte 4 eine in Abstandsrichtung 7 in Richtung des Kernkörpers 11 abstehender Pin 17 und an der zugehörigen Stütze 13 eine komplementär dazu ausgebildete Öffnung 18 vorgesehen sein. Hierdurch ist eine Vorfixierung bei der Montage der Stütze 13 an der Grundplatte 4 vergleichsweise einfach möglich, ebenso wie eine vordefinierte Ausrichtung. Eine Fixierung kann dabei ebenfalls über eine zwischen der Stütze 13 und der Grundplatte 4 angeordnete Klebeschicht, beispielsweise ein thermisches Interfacematerial 16, erfolgen. Über den Pin 17 und die zugehörige Öffnung 18 kann bei einem nicht runden Querschnitt des Pins 17 auch eine vordefinierte Drehausrichtung der Stütze 13 relativ zur Grundplatte 4 erzwungen werden. Über entsprechende an einem Rand der Öffnung 18 angeordnete Fasen kann ein Einführen des Pins 17 in die jeweilige Öffnung 18 der Stütze 13 erleichtert werden.

Um eine optimierte Ableitung mechanischer Belastungen erreichen zu können, kann an dem unteren Litzenträger 10 zumindest ein koaxial zur zugehörigen Stütze 13 angeordnetes Druckpodest 19 vorgesehen sein, über welches der untere Litzenträger 10 und damit auch die Flachspule 7 auf dem zugehörigen Kernkörper 11 aufliegt. Hierdurch kann gewährleistet werden, dass der Kernkörper 11 ausschließlich über das Druckpodest 19 Druckbelastungen und keine Biegebelastungen erfährt.

Die Grundplatte 4 weist gemäß den Fig. 1 bis 3 zumindest einen Kühlkanal 20 für ein Kühlmittel auf, wodurch eine aktive Kühlung der Grundplatte 3 und über die Wärmeleitmäntel 14 auch der jeweiligen Kernkörper 11 und damit der Ladevorrichtung 2 möglich ist. Die Grundplatte 4 selbst kann aus Metall, insbesondere aus Metall, insbesondere aus Aluminium, ausgebildet sein.

Betrachtet man die Fig. 3, so kann man erkennen, dass zwischen der Stütze 13 und dem zugehörigen und von der Stütze 13 abgestützten Kernkörper 11 eine Verteilerplatte 21 angeordnet ist, wobei die Verteilerplatte 21 über eine nicht näher bezeichnete adhäsive Schicht aus einem Material mit einer Wärmeleitfähigkeit von λ > 0,8 W/(m·K) und/oder einem Schubmodul von G < 10 MPa mit dem Kernkörper 11 verbunden ist. Durch eine derartige Verteilerplatte 21 ist sowohl eine mechanische Fixierung als auch eine verbesserte Wärmeableitung möglich.

Betrachtet man den Wärmeleitmantel 14 gemäß der Fig. 3, so kann man erkennen, dass dieser becherförmig ausgebildet ist, mit einem zwischen Kernkörper 11 und Stütze 13 angeordneten Boden 22, einem wärmeübertragend und flächig an der Stütze 13 anliegenden Mantel 23 (links in Fig. 3) und einem wärmeübertragend und flächig an der Grundplatte 4 anliegenden Rand 24. Rechts liegt der Mantel 23 dabei nicht an der Stütze 13 an, so dass hier eine Wärmeableitung ausschließlich über den Wärmeleitmantel 14 erfolgt. Eine thermische Kopplung zwischen Mantel 23 und Stütze 13 bzw. zwischen Rand 24 des Wärmeleitmantels 14 und der Grundplatte 4 kann dabei ebenfalls wiederum über ein sogenanntes thermisches Interfacematerial 16 erfolgen.

Gemäß der Fig. 3 durchdringt die Stütze 13 die Grundplatte 4, so dass in diesem Fall das Anbringen eines thermischen Interfacematerials 16 zwischen dem Mantel 23 und der Stütze 13 üblicherweise unterbleibt. Ein derartiges Durchdringen der Grundplatte 4 kann beispielsweise zu einem individuellen Abstützen der erfindungsgemäßen Bodenbaugruppe 1 genutzt werden, insbesondere auch zum Ausnivellieren eventuell bestehender Unebenheiten. Die Stütze 13 stützt sich in diesem Fall nicht auf der Grundplatte 4, sondern beispielsweise über eine eigene Mörtelschicht 25 direkt am Boden ab.

Durch den unteren Hohlraum 12 kann beispielsweise ein Luftströmungspfad führen, wobei in dem unteren Hohlraum 12 darüber hinaus ein nicht näher bezeichnetes elektronisches Bauteil angeordnet sein kann, welches durch einen in dem Luftströmungspfad strömenden Luftstrom kühlbar ist. Durch die direkte Anordnung des Wärmeleitmantels 14 an der Stütze 13 bleibt der untere Hohlraum 12 frei von weiteren Wärmeleitelementen, was Vorteile hinsichtlich des zur Verfügung stehenden Bauraums bedeutet.

Die Bodenbaugruppe 1 ist auf einer von der Grundplatte 4 abgewandten Seite der Flachspule 7 und in Abstandsrichtung 6 zu dieser beabstandet eine Deckplatte 26 auf, wobei zwischen der Flachspule 7 und der Deckplatte 26 in entsprechenden Hohlräumen Platinen 27 (vgl. Fig. 1 und 2), angeordnet sein können.

In einer alternativen Ausführungsform ist es auch denkbar, dass zwischen der Deckplatte 26 und dem Litzenträger 9 nur eine großflächige, geschlossene Platine 27 verbaut ist, wie dies gemäß der Fig. 3 gezeigt ist. Eine solche Platine 27 ist dann mit einer mechanischen Festigkeit ausgeführt, die es erlaubt, dass eine auf der Deckplatte 26 befindliche Last (z.B. ein sich darauf befindliches Fahrzeug) durch diese Platine 27 hindurch an die sich unterhalb der Platine 27 befindliche Tragstruktur aus zumindest Litzenträger 9, Kernkörper 11 und Stütze 13 weitergeleitet werden kann, ohne dabei selbst beschädigt zu werden.

Alles in allem kann mit der erfindungsgemäßen Bodenbaugruppe 1 eine vergleichsweise leichte Bodenbaugruppe 1 geschaffen werden, die über die Wärmeleitmäntel 14 zudem eine effektive Kühlung der Kernkörper 11 und darüber der Flachspule 7 ermöglicht, wodurch eine vergleichsweise hohe Ladeleistung erzielbar ist. Alles in allem weist die erfindungsgemäße Bodenbaugruppe 1 zudem einen vergleichsweise einfachen konstruktiven Aufbau auf, der zudem kostengünstig ist.

Mit der erfindungsgemäßen Bodenbaugruppe 1 lassen sich mehrere Vorteile erzielen:
- verbesserte Entwärmung und Belastung der Kernkörper 11 und dadurch hohe Lebensdauer und geringes Bruchrisiko, derselben,
- keine zusätzlichen aktiven Komponenten zur Verbesserung des Wärmetransportes, insbesondere keine Luftströmung,
- dünner Aufbau der thermischen Anbindung durch Verwendung von Wärmeleitmänteln 14, insbesondere aus Metall,
- freier Bauraum für Elektronik-Komponenten inkl. Befestigungsmöglichkeiten für Elektronikkomponenten,
- einfacher und kostengünstiger Aufbau,
- flexibel an Leistungsklasse und Umgebungsbedingungen anpassbar,
- Funktionsintegration von Elektromagnetik - Elektronik - Thermik - Mechanik.

## Patentansprüche

1. Bodenbaugruppe (1) für eine induktive Ladevorrichtung (2) zum induktiven Laden eines auf einem Untergrund (5) abgestellten Kraftfahrzeugs,
- mit einer als Kühlplatte (3) ausgebildeten Grundplatte (4), die sich quer zu einer Abstandsrichtung (6) plattenförmig erstreckt,
- mit zumindest einer Flachspule (7), die einen spiralförmig gewundenen Leiter (8) aufweist und in Abstandsrichtung (6) zur Grundplatte (4) beabstandet ist,
- mit zumindest einem Kernkörper (11), der sich quer zur Abstandsrichtung (6) plattenförmig erstreckt,
- wobei zwischen dem zumindest einen Kernkörper (11) und der Grundplatte (4) ein unterer Hohlraum (12) ausgebildet ist,
- wobei zwischen zumindest einem Kernkörper (11) und der Grundplatte (4) zumindest eine Stütze (13) vorgesehen ist, die sich in Abstandsrichtung (6) durch den unteren Hohlraum (12) erstreckt,
**dadurch gekennzeichnet,**
- **dass** zumindest ein Wärmeleitmantel (14) vorgesehen ist, der den Kernkörper (11) und die Grundplatte (4) wärmeübertragend verbindet und zumindest eine Stütze (13) mantelartig umgibt, und
- **dass** die Stütze (13) in einem Zentralbereich eines zugehörigen Kernkörpers (11) angeordnet ist.

2. Bodenbaugruppe nach Anspruch 1,
**dadurch gekennzeichnet,**
**dass** der Wärmeleitmantel (14) aus einem Material mit einer Wärmeleitfähigkeit λ > 50 W/(m·K), vorzugsweise einer Wärmeleitfähigkeit λ > 100 W/(m·K), ausgebildet ist.

3. Bodenbaugruppe nach Anspruch 1 oder 2,
**dadurch gekennzeichnet,**
- **dass** die zumindest eine Stütze (13) aus Kunststoff ausgebildet ist, oder
- **dass** die zumindest eine Stütze (13) zumindest teilweise aus Grafit oder aus Keramik, insbesondere aus Aluminiumnitrid oder Aluminiumsilizid, ausgebildet ist, oder
- **dass** die zumindest eine Stütze (13) zumindest teilweise aus Metall, insbesondere aus Aluminium, ausgebildet ist.

4. Bodenbaugruppe nach einem der vorhergehenden Ansprüche,
**dadurch gekennzeichnet,**
- **dass** der Wärmleitmantel (14) Kupfer, Aluminium und/oder Grafit aufweist, und/oder
- **dass** der Wärmeleitmantel (14) als Folie ausgebildet ist.

5. Bodenbaugruppe nach einem der vorhergehenden Ansprüche,
**dadurch gekennzeichnet,**
**dass** der Wärmeleitmantel (14) wärmeübertragend, insbesondere flächig, mit zumindest einem der nachfolgenden Bauteile verbunden ist, Grundplatte (4), Stütze (13), Kernkörper (11).

6. Bodenbaugruppe nach einem der vorherigen Ansprüche,
**dadurch gekennzeichnet,**
- **dass** die wärmeübertragende, insbesondere flächige Verbindung zwischen Wärmeleitmantel (14) und Kernkörper (11) über radial vom Wärmeleitmantel (14) abstehende Arme (15) hergestellt ist, und/oder
- **dass** die wärmeübertragende, insbesondere flächige Verbindung zwischen Wärmeleitmantel (14) und Grundplatte (4) über radial vom Wärmeleitmantel (14) abstehende Arme (15') hergestellt ist.

7. Bodenbaugruppe nach einem der vorhergehenden Ansprüche,
**dadurch gekennzeichnet,**
**dass** der Wärmeleitmantel (14) über ein thermisches Interface Material (16), insbesondere über einen Klebstoff, eine Wärmeleitpaste oder eine Klebefolie mit einer Wärmeleitfähigkeit λ > 0,80 W/(m·K) mit zumindest der Grundplatte (4) und dem Kernkörper (11) verbunden ist.

8. Bodenbaugruppe nach einem der vorhergehenden Ansprüche,
**dadurch gekennzeichnet,**
**dass** an der Grundplatte (4) ein in Abstandsrichtung (6) abstehender Pin (17) und der zugehörigen Stütze (13) eine komplementär dazu ausgebildete Öffnung (18) vorgesehen sind.

9. Bodenbaugruppe nach einem der vorhergehenden Ansprüche,
**dadurch gekennzeichnet,**
**dass** die Flachspule (7) einen oberen Litzenträger (9) und einen unteren Litzenträger (10) aufweist, der zumindest einen koaxial zu einer zugehörigen Stütze (13) angeordneten Druckpodest (19) aufweist, über welchen der untere Litzenträger (10) auf einem zugehörigen Kernkörper (11) aufliegt.

10. Bodenbaugruppe nach Anspruch 1 oder 2,
**dadurch gekennzeichnet,**
- **dass** die Grundplatte (4) zumindest einen Kühlkanal (20) für ein Kühlmittel aufweist, und/oder
- **dass** die Grundplatte (4) zumindest teilweise aus Metall, insbesondere aus Aluminium, ausgebildet ist.

11. Bodenbaugruppe nach einem der vorhergehenden Ansprüche,
**dadurch gekennzeichnet,**
**dass** zwischen zumindest einer Stütze (13) und einem zugehörigen Kernkörper (11) eine Verteilerplatte (21) angeordnet ist.

12. Bodenbaugruppe nach Anspruch 11,
**dadurch gekennzeichnet,**
**dass** die Verteilerplatte (21) über eine adhäsive Schicht aus einem Material mit einer Wärmeleitfähigkeit von λ > 0,8 W/(m·K) und/oder einem Schubmodul von G < 10 MPa mit dem Kernkörper (11) verbunden ist.

13. Bodenbaugruppe nach einem der vorhergehenden Ansprüche,
**dadurch gekennzeichnet,**
- **dass** zumindest eine Stütze (13) die Grundplatte (4) durchdringt,
- **dass** zumindest ein Wärmeleitmantel (14) becherförmig ausgebildet ist, mit einem zwischen Kernkörper (11) und Stütze (13) angeordneten Boden (22), einem die Stütze (13) umgebenden Mantel (23) und einem wärmeübertragend und flächig an der Grundplatte (4) anliegenden Rand (24).

14. Bodenbaugruppe nach einem der vorhergehenden Ansprüche,
**dadurch gekennzeichnet,**
- **dass** durch den unteren Hohlraum (12) ein Luftströmungspfad führt und/oder
- **dass** in dem unteren Hohlraum (12) zumindest ein elektronisches Bauteil angeordnet ist.

15. Bodenbaugruppe nach einem der vorhergehenden Ansprüche,
**dadurch gekennzeichnet,**
- **dass** die Bodenbaugruppe (1) auf der von der Grundplatte (4) abgewandten Seite der Flachspule (7) und in Abstandsrichtung (6) zu dieser beabstandet eine Deckplatte (26) aufweist,
- **dass** zwischen der Flachspule (7) und der Deckplatte (26) eine Platine (27) angeordnet ist.

## Claims

1. Ground assembly (1) for an inductive charging device (2) for inductively charging a motor vehicle parked on a surface (5),
- with a base plate (4) in the form of a cooling plate (3), which extends perpendicular to a spacing direction (6) in the form of a plate,
- with at least one flat coil (7), which has a spirally wound conductor (8) and is spaced apart from the base plate (4) in the spacing direction (6),
- with at least one core body (11), which extends perpendicular to the spacing direction (6) in the form of a plate,
- wherein a lower cavity (12) is formed between the at least one core body (11) and the base plate (4),
- wherein at least one support (13) is provided between at least one core body (11) and the base plate (4), which support extends in the spacing direction (6) through the lower cavity (12),
**characterized in that**
- at least one heat-conducting jacket (14) is provided, which connects the core body (11) and the base plate (4) in a heat-transferring manner and surrounds at least one support (13) in a jacket-like manner, and
- the support (13) is arranged in a central region of an associated core body (11).

2. Ground assembly according to claim 1,
**characterized in that**
the heat-conducting jacket (14) is made of a material with a thermal conductivity of λ > 50 W/(m·K), preferably a thermal conductivity of λ > 100 W/(m·K).

3. Ground assembly according to claim 1 or 2,
**characterized in that**
- the at least one support (13) is made of plastic, or
- the at least one support (13) is made at least partly of graphite or ceramic, in particular aluminum nitride or aluminum silicide, or
- the at least one support (13) is made at least partly of metal, in particular aluminum.

4. Ground assembly according to any one of the preceding claims,
**characterized in that**
- the heat-conducting jacket (14) includes copper, aluminum and/or graphite, and/or
- the heat-conducting jacket (14) is in the form of a foil.

5. Ground assembly according to any one of the preceding claims,
**characterized in that**
the heat-conducting jacket (14) is connected in a heat-transferring manner, in particular planar, to at least one of the following components: base plate (4), support (13), core body (11).

6. Ground assembly according to any one of the preceding claims,
**characterized in that**
- the heat-transferring, in particular planar, connection between the heat-conducting jacket (14) and the core body (11) is established via arms (15) that project radially from the heat-conducting jacket (14), and/or
- the heat-transferring, in particular planar, connection between the heat-conducting jacket (14) and the base plate (4) is established via arms (15') that project radially from the heat-conducting jacket (14).

7. Ground assembly according to any one of the preceding claims,
**characterized in that**
the heat-conducting jacket (14) is connected to at least the base plate (4) and the core body (11) via a thermal interface material (16), in particular an adhesive, a heat-conducting paste or an adhesive film with a thermal conductivity of λ > 0.80 W/(m·K).

8. Ground assembly according to any one of the preceding claims,
**characterized in that**
a pin (17) that protrudes in the spacing direction (6) is provided on the base plate (4) and a complementary opening (18) is provided on the associated support (13).

9. Ground assembly according to any one of the preceding claims,
**characterized in that**
the flat coil (7) has an upper strand carrier (9) and a lower strand carrier (10) which has at least one pressure platform (19) arranged coaxially to an associated support (13), via which the lower strand carrier (10) rests on an associated core body (11).

10. Ground assembly according to claim 1 or 2,
**characterized in that**
- the base plate (4) has at least one cooling channel (20) for a coolant, and/or
- the base plate (4) is made at least partially of metal, in particular aluminum.

11. Ground assembly according to any one of the preceding claims,
**characterized in that**
a distribution plate (21) is arranged between at least one support (13) and an associated core body (11).

12. Ground assembly according to claim 11,
**characterized in that**
the distribution plate (21) is connected to the core body (11) via an adhesive layer made of a material with a thermal conductivity of λ > 0.8W/(m·K) and/or a shear modulus of G < 10 MPa.

13. Ground assembly according to any one of the preceding claims,
**characterized in that**
- at least one support (13) penetrates the base plate (4),
- at least one heat-conducting jacket (14) is cup-shaped, with a base (22) arranged between the core body (11) and the support (13), a jacket (23) surrounding the support (13) and an edge (24) that is heat-conducting and lies flat against the base plate (4).

14. Ground assembly according to any one of the preceding claims,
**characterized in that**
- an air flow path leads through the lower cavity (12) and/or
- at least one electronic component is arranged in the lower cavity (12).

15. Ground assembly according to any one of the preceding claims,
**characterized in that**
- the ground assembly (1) has a cover plate (26) on the side of the flat coil (7) facing away from the base plate (4) and spaced apart therefrom in the spacing direction (6),
- a circuit board (27) is arranged between the flat coil (7) and the cover plate (26).

## Revendications

1. Ensemble de plancher (1) pour un dispositif de charge (2) inductif pour la charge inductive d'un véhicule automobile stationné sur un sol (5),
- avec une plaque de base (3) formée comme plaque de refroidissement (4) s'étend transversalement à un sens d'espacement (6) en forme de plaque,
- avec au moins une bobine plate (7) qui présente un conducteur (8) enroulé en spirale et est espacée dans le sens d'espacement (6) par rapport à la plaque de base (4),
- avec au moins un corps de noyau (11) qui s'étend transversalement au sens d'espacement (6) en forme de plaque,
- dans lequel un espace creux (12) inférieur est formé entre l'au moins un corps de noyau (11) et la plaque de base (4),
- dans lequel au moins un appui (13) est prévu entre au moins un corps de noyau (11) et la plaque de base (4), appui qui s'étend dans le sens d'espacement (6) à travers l'espace creux (12) inférieur,
**caractérisé en ce que**
- au moins une enveloppe thermoconductice (14) est prévue, laquelle relie de manière à transmettre la chaleur le corps de noyau (11) et la plaque de base (4) et entoure comme une enveloppe au moins un appui (13) et
- l'appui (13) est agencé dans une zone centrale d'un corps de noyau (11) afférent.

2. Ensemble de plancher selon la revendication 1,
**caractérisé en ce que**
l'enveloppe thermoconductrice (14) est formée en un matériau avec une conductivité thermique λ > 50 W/(m·K), de préférence une conductivité thermique λ > 100 W/(m·K).

3. Ensemble de plancher selon la revendication 1 ou 2,
**caractérisé en ce que**
- l'au moins un appui (13) est formé en matière plastique ou
- l'au moins un appui (13) est formé au moins partiellement en graphite ou en céramique, en particulier en nitrure d'aluminium ou siliciure d'aluminium ou
- l'au moins un appui (13) est formé au moins partiellement en métal, en particulier en aluminium.

4. Ensemble de plancher selon l'une quelconque des revendications précédentes,
**caractérisé en ce que**
- l'enveloppe thermoconductrice (14) présente du cuivre, de l'aluminium et/ou du graphite et/ou
- l'enveloppe thermoconductrice (14) est formée comme film.

5. Ensemble de plancher selon l'une quelconque des revendications précédentes,
**caractérisé en ce que**
l'enveloppe thermoconductrice (14) est reliée de manière à transmettre la chaleur, en particulier à plat, à au moins un des composants suivants plaque de base (4), appui (13), corps de noyau (11).

6. Ensemble de plancher selon l'une quelconque des revendications précédentes, **caractérisé en ce que**
- la liaison transmettant la chaleur, en particulier plate est établie entre l'enveloppe thermoconductrice (14) et le corps de noyau (11) par le biais de bras (15) dépassant radialement de l'enveloppe thermoconductrice (14) et/ou
- la liaison transmettant la chaleur, en particulier plate est établie entre l'enveloppe thermoconductrice (14) et la plaque de base (4) par le biais de bras (15') dépassant radialement de l'enveloppe thermoconductrice (14).

7. Ensemble de plancher selon l'une quelconque des revendications précédentes,
**caractérisé en ce que**
l'enveloppe thermoconductrice (14) est reliée par le biais d'un matériau d'interface thermique (16), en particulier par le biais d'une colle, d'une pâte thermoconductrice ou d'un film adhésif avec une conductivité thermique λ > 0,80 W/(m·K) à au moins la plaque de base (4) et le corps de noyau (11).

8. Ensemble de plancher selon l'une quelconque des revendications précédentes,
**caractérisé en ce que**
une ouverture (18) formée de manière complémentaire est prévue au niveau de la plaque de base (4) dans une broche (17) dépassant dans le sens d'espacement (6) et l'appui (13) afférent.

9. Ensemble de plancher selon l'une quelconque des revendications précédentes,
**caractérisé en ce que**
la bobine plate (7) présente un support de toron (9) supérieur et un support de toron (10) inférieur qui présente au moins une plateforme de pression (19) agencée coaxialement à un appui (13) afférent, par le biais de laquelle le support de toron (10) inférieur repose sur un corps de noyau (11) afférent.

10. Ensemble de plancher selon la revendication 1 ou 2,
**caractérisé en ce que**
- la plaque de base (4) présente au moins un canal de refroidissement (20) pour un moyen de refroidissement et/ou
- la plaque de base (4) est formée au moins partiellement en métal, en particulier en aluminium.

11. Ensemble de plancher selon l'une quelconque des revendications précédentes,
**caractérisé en ce que**
une plaque de distribution (21) est agencée entre au moins un appui (13) et un corps de noyau (11) afférent.

12. Ensemble de plancher selon la revendication 11,
**caractérisé en ce que**
la plaque de distribution (21) est reliée par le biais d'une couche adhésive en un matériau avec une conductivité thermique de λ > 0,8W/(m·K) et/ou un module de poussée de G < 10 MPa au corps de noyau (11).

13. Ensemble de plancher selon l'une quelconque des revendications précédentes, **caractérisé en ce que**
- au moins un appui (13) traverse la plaque de base (4),
- au moins une enveloppe thermoconductrice (14) est formée en coupe avec un fond (22) agencé entre le corps de noyau (11) et l'appui (13), une enveloppe (23) entourant l'appui (13) et un bord (24) reposant de manière à transmettre la chaleur et à plat contre la plaque de base (4).

14. Ensemble de plancher selon l'une quelconque des revendications précédentes,
**caractérisé en ce que**
- un chemin d'écoulement d'air traverse l'espace creux (12) inférieur et/ou
- au moins un composant électronique est agencé dans l'espace creux (12) inférieur.

15. Ensemble de plancher selon l'une quelconque des revendications précédentes,
**caractérisé en ce que**
- le composant de plancher (1) présente sur le côté éloigné de la plaque de base (4) de la bobine plate (7) et à distance dans le sens d'espacement (6) à celle-ci une plaque de recouvrement (26),
- une platine (27) est agencée entre la bobine plate (7) et la plaque de recouvrement (26).
